# EUROPÄISCHE PATENTANMELDUNG

(11) **EP 1 308 370 A1**
(43) Veröffentlichungstag der Anmeldung: **07.05.2003**
(21) Anmeldenummer: 02021511.7
(22) Anmeldetag: 26.09.2002
(51) Int. Cl.: B62D 11/18

(54) **Kettenfahrzeug mit einem Antriebssystem**

(30) Priorität: 30.10.2001 DE 10154651
(71) Anmelder: Kässbohrer Geländefahrzeug AG, 88471 Laupheim (DE)
(72) Erfinder: Kanzler, Helmut, 89269 Vöhringen (DE); Kuhn, Michael, 88480 Achstetten (DE); Mayer, Stephan, 89597 Munderkingen (DE)
(74) Vertreter: Patentanwälte Ruff, Wilhelm, Beier, Dauster & Partner

(57) **Zusammenfassung**

Ein Kettenfahrzeug (1) mit einem Antriebssystem (4) sowie mit einem Lenkfunktionsbedienelement (11) und mit einem Fahrfunktionsbedienelement (13), die mit dem Antriebssystem in Wirkverbindung stehen, ist bekannt. Erfindungsgemäß sind das Lenkfunktionsbedienelement und/oder das Fahrfunktionsbedienelement als Sollwertgeber (20) zur elektronischen Ansteuerung eines entsprechenden Lenkfunktionsmoduls und/oder eines entsprechenden Fahrfunktionsmoduls des Antriebssystems ausgeführt.

## Beschreibung

Die Erfindung betrifft ein Kettenfahrzeug mit einem Antriebssystem, sowie mit einem Lenkfunktionsbedienelement und mit einem Fahrfunktionsbedienelement, die mit dem Antriebssystem in Wirkverbindung stehen.

Kettenfahrzeuge, die zur Pflege von Schneepisten eingesetzt werden, sind allgemein bekannt. Ein derartiges Kettenfahrzeug weist auf gegenüberliegenden Fahrzeugseiten je einen Kettentrieb auf, die durch hydrostatische Antriebe angetrieben sind. Die entsprechende Antriebshydraulik wird durch wenigstens eine Pumpeinrichtung gespeist, die von einem Verbrennungsmotor angetrieben ist. Ein als Fahrfunktionsbedienelement dienendes Gaspedal steht über einen Bowdenzug mit dem Verbrennungsmotor in Verbindung, so dass eine Betätigung des Gaspedals eine Erhöhung oder Erniedrigung der Motordrehzahl des Verbrennungsmotors bewirkt. Zudem ist als Lenkfunktionsbedienelement in einem Sitzbereich eines Fahrers des Kettenfahrzeugs ein Lenkrad vorgesehen, das hydraulisch derart mit den hydrostatischen Antrieben beider Kettentriebe in Verbindung steht, dass entsprechende Lenkbewegungen unterschiedliche Antriebsgeschwindigkeiten der gegenüberliegenden Kettentriebe bewirken. Hierdurch wird eine entsprechende Kurvenfahrt des Kettenfahrzeugs bewirkt.

Aufgabe der Erfindung ist es, ein Kettenfahrzeug der eingangs genannten Art zu schaffen, das einen verbesserten Fahrkomfort ermöglicht.

Diese Aufgabe wird dadurch gelöst, dass das Lenkfunktionsbedienelement und/oder das Fahrfunktionsbedienelement als Sollwertgeber zur elektronischen Ansteuerung eines entsprechenden Lenkfunktionsmoduls und/oder eines entsprechenden Fahrfunktionsmoduls des Antriebssystems ausgeführt sind. Durch die erfindungsgemäße Lösung sind das Lenkfunktionsbedienelement und/oder das Fahrfunktionsbedienelement mechanisch oder hydraulisch vollständig entkoppelt von dem Antriebssystem. Es ist lediglich noch eine elektronische Wirkverbindung zwischen dem Lenkfunktionsbedienelement bzw. dem Fahrfunktionsbedienelement und dem Antriebssystem vorhanden. Dadurch, dass das Lenkfunktionsmodul und das Fahrfunktionsmodul des Antriebssystems rein elektronisch angesteuert werden, ist es möglich, sowohl den Fahrkomfort als auch Wirkungsgrad und Genauigkeit als auch andere Eigenschaften des Lenkfunktionsmoduls und des Fahrfunktionsmoduls stark zu verbessern. Es ist möglich, eine Vielzahl verschiedener Kennfelder für unterschiedliche Fahrsituationen bereitzustellen und das Lenkfunktionsmodul und das Fahrfunktionsmodul gemäß diesen Kennfeldern anzusteuern. Vorzugsweise sind eine oder mehrere Mikroprozessoren vorgesehen, die durch Eingabe entsprechender Kennfelder programmierbar sind, wodurch eine Ansteuerung des Lenkfunktionsmoduls und des Fahrfunktionsmoduls durch intelligente Rechnervorgänge erfolgen kann.

In Ausgestaltung der Erfindung ist dem Lenkfunktionsbedienelement und/oder dem Fahrfunktionsbedienelement jeweils ein Sensormittel zur Erfassung von Bedienbewegungen zugeordnet, das jeweils durch wenigstens eine elektronische Datenübertragungsleitung mit einer elektronischen Steuereinheit in Verbindung steht, dass das Lenkfunktionsmodul und das Fahrfunktionsmodul mit Sensoren zur Erfassung von Istwerten für Lenk- und Fahrvorgänge versehen sind, und dass die elektronische Steuereinheit mit Auswertemitteln versehen ist, die abhängig von einem vorgegebenen Soll/Istwert-Kennfeld das Lenkfunktionsmodul und das Fahrfunktionsmodul entsprechend ansteuern. Das Soll/Istwert-Kennfeld stellt ein Kennfeld dar, in dem jedem Sollwert, der durch die Lenkfunktions- oder Fahrfunktionsbedienung erfasst wird, abhängig von gewünschten und vorgegebenen Fahr- und Lenksituationen eine entsprechende Ansteuerung des Lenkfunktionsmoduls oder des Fahrfunktionsmoduls zugeordnet ist. Ob die Ansteuerung tatsächlich zu dem gewünschten, vorgegebenen Wert führt, wird durch ständigen Vergleich mit den erfassten Istwerten des Lenkfunktionsmoduls und des Fahrfunktionsmoduls erfasst.

In weiterer Ausgestaltung der Erfindung sind eine das Lenkfunktionsbedienelement und das Lenkfunktionsmodul umfassende Lenkfunktionskomponente und/oder eine das Fahrfunktionsbedienelement und das Fahrfunktionsmodul umfassende Fahrfunktionskomponente redundant ausgeführt. Die redundante Ausführung gewährleistet eine hohe Funktionssicherheit. Zudem ist durch die redundante Ausführung die Möglichkeit gegeben, für das Kettenfahrzeug eine Straßenzulassung zu erhalten.

In weiterer Ausgestaltung der Erfindung erfassen die Sensormittel physikalische Bewegungsgrößen der Bedienbewegungen. Insbesondere werden Winkeländerungen eines als Lenkfunktionsbedienelement dienenden Lenkrades oder Pedalwege eines als Fahrfunktionsbedienelement dienenden Fahrpedals erfasst. Auch die zeitabhängige Erfassung dieser Größen wird vorzugsweise erfasst, um schnelle oder langsame Lenkrad- oder Pedalbewegungen erkennen zu können. Hierdurch ist es möglich, die Erkennbarkeit der Fahrdynamik für einen Fahrer zu erhöhen.

In weiterer Ausgestaltung der Erfindung ist das Soll/Istwert-Kennfeld für das Fahrfunktionsmodul und/oder das Lenkfunktionsmodul derart ausgeführt, dass erfasste physikalische Bewegungsgrößen der Sollwertgeber, insbesondere Weg-, Winkel- und/oder Zeitintervalle, nicht linear, parametriert auf das Lenkfunktionsmodul und/oder das Fahrfunktionsmodul übertragen werden, insbesondere abhängig von einer Fahrgeschwindigkeit des Kettenfahrzeugs. Dadurch ist es möglich, eine indirekte Lenkung zu erzielen und insbesondere bei höheren Fahrgeschwindigkeiten des Kettenfahrzeugs noch sichere Lenkvorgänge durchzuführen, auch ohne größere Erfahrung eines Fahrers. So ist es insbesondere möglich, den Pedalweg in niederen Geschwindigkeitsbereichen zu erhöhen und in hohen Geschwindigkeitsbereichen zu reduzieren, damit ein Fahrer bei niederen Geschwindigkeiten ein besseres Gefühl für Beschleunigungen oder Verzögerungen des Kettenfahrzeugs erhält.

In vorteilhafter Weise werden Lenkbewegungswinkeln oder -wegen bei höheren Geschwindigkeiten größere Kurvenradien zugeordnet als bei geringen Geschwindigkeiten, um auch bei höheren Geschwindigkeiten eine ausreichende Fahrsicherheit bei starken Lenkeinschlägen zu ermöglichen.

In weiterer Ausgestaltung der Erfindung ist dem Lenkfunktionsbedienelement ein Lenkkraftsimulator zugeordnet, der auf fahrdynamische Eigenschaften der Lenkfunktionskomponente abgestimmt ist. Hierdurch ist es insbesondere möglich, Gegenkräfte bei einer Lenkbewegung aufzubringen, um dem Fahrer mehr Gefühl für den entsprechenden Lenkvorgang zu vermitteln. Hierdurch ist ein PKW-ähnliches Fahrgefühl erreichbar. Durch Aufbau entsprechender Gegenkräfte oder -momente ist zudem gewährleistet, dass Lenkbewegungen nicht schneller erfolgen können als die entsprechend daraus resultierende Ansteuerung des Lenkfunktionsmoduls.

In weiterer Ausgestaltung der Erfindung erfolgt eine Parametrierung der Übertragung von Lenkbewegungen des Lenkfunktionsbedienelementes abhängig von einem Kurvenradius des Kettenfahrzeugs oder abhängig von einer Reaktionszeit des Lenkfunktionsmoduls. Hierdurch wird dem Fahrer des Kettenfahrzeugs ein besseres Gefühl für die jeweilige Fahrsituation wie auch ein verbessertes Fahrdynamikempfinden gegeben.

In weiterer Ausgestaltung der Erfindung sind der Lenkfunktionskomponente und/oder der Fahrfunktionskomponente Funktionsüberwachungsmittel zugeordnet, die mit der elektronischen Steuereinheit in Verbindung stehen, und in der Auswerteeinheit ist ein Fehlerkennfeld abgespeichert, das bei Ausfall einer redundant ausgeführten Komponente eine Notfahrfunktion für das Antriebssystem auslöst. Bei Ausfall einer redundanten Komponente kann eine sogenannte "limp home"-Funktion ausgelöst werden, die ein Fahren des Kettenfahrzeugs noch ermöglicht, allerdings bei wesentlich reduzierter Maximalgeschwindigkeit. Hierdurch soll die Möglichkeit geschaffen sein, das Kettenfahrzeug noch bis zur nächsten Werkstatt fahren zu können.

In weiterer Ausgestaltung der Erfindung sind an die elektronische Steuereinheit angeschlossene Fahrzustandssensoren vorgesehen, die momentane Fahrzustände des Kettenfahrzeugs erfassen, und in der Auswerteeinheit ist ein Fahrstabilitätsprogramm abgelegt, das abhängig von den erfassten momentanen Fahrzuständen eine Ansteuerung von Funktionskomponenten des Antriebssystems durchführt. Derartige Fahrstabilitätsprogramme sind grundsätzlich aus dem PKW-Bereich bereits bekannt. Alle Fahrzustandssensoren können insbesondere in Gier- oder Querbeschleunigungssensoren eingesetzt werden. Derartige Informationen über Gierwinkel oder Querbeschleunigung können zusammen mit entsprechenden Informationen über Fahrgeschwindigkeit, Lenkwinkel, Lenkgeschwindigkeit, Fahrpedal- oder Bremspedalstellung und Motordrehzahl oder ähnlichen Informationen mittels eines entsprechenden Auswertungsalgorithmus zu Überprüfungen herangezogen werden, ob die Fahrsituation sich noch innerhalb der zulässigen, fahrdynamisch stabilen Grenzen bewegt. Bei Bedarf kann mittels der elektronischen Ansteuerung der verschiedenen Antriebskomponenten eine geeignete Gegensteuerung durchgeführt werden. Im Gegensatz zu Radfahrzeugen, wie PKWs, erfolgt ein entsprechender Gegensteuerungseingriff aber nicht über einen Bremseingriff, sondern über entsprechend schnelle Ansteuerung der Antriebshydraulik, insbesondere durch schnelles Verschwenken der jeweiligen, dem links- oder rechtsseitigen Kettentrieb zugeordneten linken oder rechten Fahrpumpe, die Teil der jeweiligen Antriebshydraulik ist.

In weiterer Ausgestaltung der Erfindung sind Sensormittel zur gleichzeitigen Erfassung von Antriebsdrehzahlen beider Kettentriebseiten vorgesehen, und die elektronische Steuereinheit wertet übermittelte Daten der Sensormittel derart aus, dass ein Synchronlauf beider Kettentriebe abhängig von jeder momentanen Bewegungsposition des Lenkfunktionsbedienelementes erfolgt. Hierdurch ist zum einen ein sicherer Geradeauslauf des Kettenfahrzeugs auch bei hohen Fahrgeschwindigkeiten erzielbar. Zum anderen können der tatsächlich gefahrene Kurvenradius und die unterschiedlichen Kettenlaufgeschwindigkeiten auf beiden Fahrzeugseiten so aufeinander abgestimmt werden, dass Schlupf zwischen Kette und befahrenem Untergrund weitgehend vermieden wird.

In weiterer Ausgestaltung der Erfindung sind Dämpfungsmittel für das Fahrfunktionsbedienelement vorgesehen. Der Hintergrund dieser Ausgestaltung war, dass geringe Fußbewegungen auf ein Fahrpedal, die durch Fahrzeugerschütterungen auftreten können, nicht zu entsprechender Beschleunigung oder Verzögerung des Kettenfahrzeugs führen sollten. Vorzugsweise sind die Dämpfungsmittel elektronisch ausgeführt.

In weiterer Ausgestaltung der Erfindung sind in der elektronischen Steuereinheit Sperrfunktionen abgespeichert, die vorgegebene Betriebsfunktionen in definierten Fahrsituationen wahlweise oder zwangsläufig blockieren. Hierdurch ist es möglich, insbesondere hochdynamische Fahrmanöver wie insbesondere einen Kettengegenlauf bei vollem Lenkeinschlag, zu verriegeln. Es ist auch möglich, ein entsprechendes Fahrstabilitätsprogramm wahlweise abzuschalten. Wesentlich ist es, dass die Sperrfunktionen, die lediglich hochdynamische Fahrmanöver blockieren, auch abschaltbar, d.h. freigebbar, gestaltet sind, damit jeder Fahrer individuell seine eigenen fahrerischen Grenzbereiche ausloten kann.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch ein Blockschaltbild eines Antriebssystems einer Ausführungsform eines erfindungsgemäßen Kettenfahrzeugs,
- Fig. 2: eine Kennlinie einer Fahrfunktionskomponente des Antriebssystems nach Fig. 1,
- Fig. 3: eine Kennlinie einer Lenkfunktionskomponente des Antriebssystems nach Fig. 1 und
- Fig. 4: schematisch in einer Seitenansicht eine Ausführungsform eines erfindungsgemäßen Kettenfahrzeugs, das mit einem Antriebssystem nach den Fig. 1 bis 3 versehen ist.

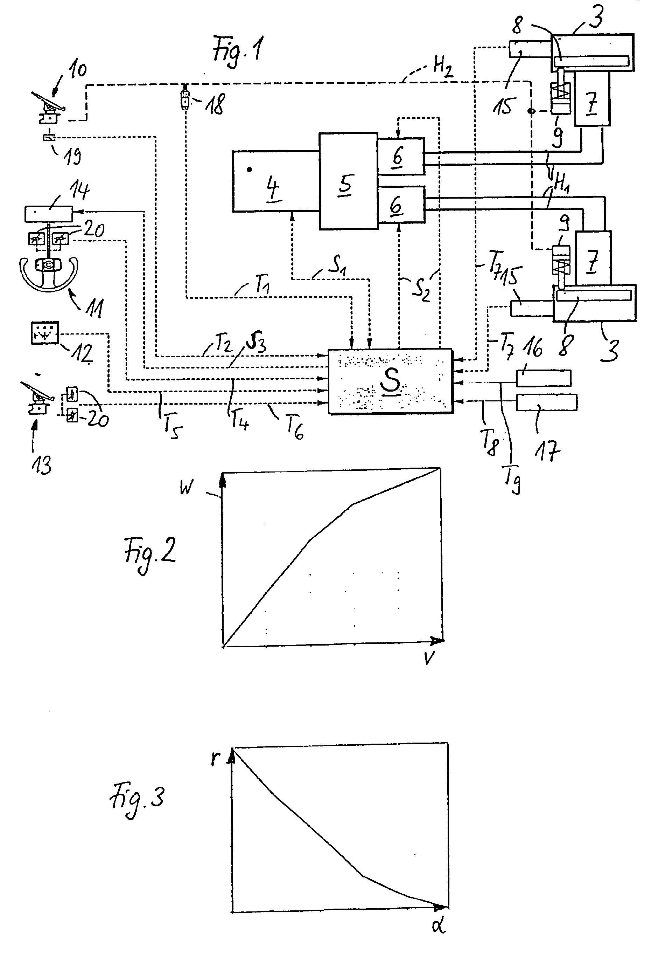

Ein Kettenfahrzeug 1 nach Fig. 4 stellt ein Kraftfahrzeug zur Beförderung von mehreren Personen im Sinne eines Personenkraftwagens dar. Das Kettenfahrzeug 1 ist auf gegenüberliegenden Fahrzeugseiten mit jeweils einem umlaufenden Kettentrieb 2 versehen, der durch jeweils ein Turasrad 3 angetrieben ist. Jedes Turasrad 3 wird unter Zwischenschaltung eines nicht näher bezeichneten Getriebes durch jeweils einen Hydromotor 7 (Fig. 1) einer Antriebshydraulik angetrieben. Die Hydromotoren 7 sind Teil eines Antriebssystems, das unter Zuhilfenahme der Darstellungen gemäß den Fig. 1 bis 3 nachfolgend näher beschrieben wird.

Die Antriebshydraulik ist für jede Kettentriebseite separat aufgebaut. Jede Kettentriebseite weist eine hydraulische Fahrpumpe 6 auf, die über einen Hydraulikkreis H₁ mit dem jeweiligen Hydromotor 7 auf der jeweiligen Fahrzeugseite verbunden ist. Die Fahrpumpen 6 für jede Kettentriebseite stellen grundsätzlich bekannte Hydropumpen dar, die bis zur Volllast stufenlos ausschwenkbar sind. In entsprechender Weise ist auch jeder Hydromotor 7 durch den entsprechenden Hydraulikkreis H₁ stufenlos steuerbar, so dass sich für jede Fahrzeugseite ein stufenloser Kettenantrieb ergibt. Beide Fahrpumpen 6 werden über ein Verteilergetriebe 5 gemeinsam von einem zentralen Verbrennungsmotor 4, vorliegend in Form eines Ottomotors, angetrieben. Die Antriebssteuerung im normalen Fahrbetrieb erfolgt elektronisch mit einer zentralen, elektronischen Steuereinheit S, wie nachfolgend näher beschrieben werden wird.

Das Antriebssystem weist für den normalen Fahrbetrieb mehrere Funktionskomponenten auf. Eine Bremsfunktionskomponente umfasst ein Bremsfunktionsbedienelement in Form eines Bremspedals 10, eine zugehörige Bremsfunktionselektronik mit entsprechenden Ansteuerungsmöglichkeiten für die Hydromotoren 7 beider Fahrzeugseiten sowie einen hydraulischen Bremskreis H₂, der für jede Fahrzeugseite jeweils einen Bremskolben 9 umfasst, die auf jeweils eine im Bereich jedes Turasrades 3 positionierte Lamellenbremse 8 wirken.

Eine Lenkfunktionskomponente umfasst ein Lenkfunktionsbedienelement, vorliegend in Form eines Lenkrades 11 sowie eine zugehörige, innerhalb der zentralen Steuereinheit S integrierte Lenkfunktionselektronik einschließlich entsprechender Ansteuerungsmöglichkeiten der Fahrpumpen 6.

Eine Fahrfunktionskomponente umfasst ein Fahrfunktionsbedienelement, vorliegend in Form eines Fahrpedals 13 sowie eine in der elektronischen Steuereinheit S integrierte Fahrfunktionselektronik einschließlich entsprechender Ansteuerungsmöglichkeiten auf die Fahrpumpen 6 sowie auf den Verbrennungsmotor 4.

Als Lenkfunktionsmodul bzw. als Fahrfunktionsmodul wird die jeweilige Fahrfunktions- bzw. Lenkfunktionselektronik einschließlich aller entsprechenden Ansteuerungsmöglichkeiten auf die jeweilige Antriebshydraulik bzw. auf den Verbrennungsmotor 4 bezeichnet.

Über die zuvor beschriebenen Funktionskomponenten hinaus sind in der elektronischen Steuereinheit S noch zusätzliche Ansteuerungs- und Fahrprogrammmöglichkeiten abgespeichert, die ebenfalls nachfolgend näher beschrieben werden.

Zur Lenkfunktionskomponente zählt noch ein Lenkkraftsimulator 14, der auf das schwenk- oder drehbewegliche Lenkrad 11 Gegenkräfte oder Gegenmomente aufbringen kann, wie nachfolgend näher beschrieben werden wird.

Um einen Bremsvorgang einzuleiten, betätigt ein Fahrer des Kettenfahrzeugs 1 das Bremspedal 10, das hydraulisch in den Hydraulikkreis H₂ integriert ist. Normale Bremsverzögerungen erfolgen durch entsprechende Ansteuerung der Hydromotoren 7, indem die Steuereinheit S die Fahrpumpen 6 entsprechend zurückschwenkt. Zur Erfassung der Bremsdruckerhöhung im Hydraulikkreis H₂ durch die Betätigung des Bremspedals 10 ist ein Drucksensor 18 in den Hydraulikkreis H₂ eingeschaltet, der über eine Signalleitung T₁ mit der Steuereinheit S in Verbindung steht. Über entsprechende Steuerleitungen S₂ werden die Fahrpumpen 6 mittels der Bremsfunktionselektronik synchron angesteuert, so dass die gewünschte Fahrzeugverzögerung durch entsprechende Rückstellung der Hydromotoren 7 erfolgt. Im Bereich jedes Turasrades 3 ist jeweils ein Drehzahlsensor 15 vorgesehen, der die jeweilige Istdrehzahl an jedem Turasrad erfasst und an die Steuereinheit S übermittelt. Dadurch ist eine Regelung der Bremsfunktion ermöglicht, da mittels eines ständigen Soll-lstwertvergleichs und einem durch die Bremsfunktionselektronik vorgegebenen Kennfeld die gewünschte Bremsfunktion bei einer Betätigung des Bremspedals 10 erzielt wird. Die Drehzahlsensoren 15 stehen über Signalleitungen T₇ mit der elektronischen Steuereinheit S in Verbindung.

Die Übertragung der Bremsfunktion auf die Hydromotoren 7 erfolgt bis zu einem vorgegebenen Systemdruck innerhalb des Hydraulikkreises H₂ elektronisch, d.h. durch Sollwerterfassung mittels des Drucksensors 18 und durch elektronische Ansteuerung der Fahrpumpen 6. Der Druckschwellwert, bis zu dem die beschriebene Bremsfunktionssteuerung erfolgt, beträgt beim vorliegenden Ausführungsbeispiel ca. 15bar. Bei einem Druck innerhalb des Hydraulikkreises H₂ von mehr als 15bar erfolgt bei einer Betätigung des Bremspedals 10 eine hydraulische Ansteuerung der Lamellenbremse 8. Diese hydraulische Ansteuerung kann alternativ oder zusätzlich zu der Ansteuerung der Hydromotoren 7 erfolgen. Die Bremskolben 9 sind derart in Lüftrichtung federdruckbelastet, dass sie bis zu dem beschriebenen Druckschwellwert von ungefähr 15bar gelüftet sind, so dass die Lamellenbremsen 8 bis zu diesem Druckschwellwert in gelüfteter Ruheposition befindlich sind.

Das Lenkrad 11 steht ausschließlich elektronisch mit der elektronischen Steuereinheit S in Verbindung. Lenkradbewegungen werden durch zwei Potentiometer 20 erfasst, die entsprechende Schwenkwinkel aufgrund der Lenkeinschläge an die elektronische Steuereinheit als Sollwerte übermitteln. Die Datenübermittlung von Lenkeinschlägen ist redundant ausgeführt. Aus diesem Grund sind die beiden Potentiometer 20 vorgesehen. Abhängig von einem in der Steuereinheit S abgespeicherten Soll/Istwert-Kennfeld, das Teil der Lenkfunktionselektronik ist, werden die Fahrpumpen 6 über die Steuerleitungen S₂ entsprechend angesteuert. Je nach Lenkeinschlag wird dabei die eine Fahrpumpe 6 zurückgefahren und die andere ausgeschwenkt, so dass sich auf der einen Fahrzeugseite eine reduzierte Kettengeschwindigkeit und gegebenenfalls auf der anderen Fahrzeugseite eine entsprechend erhöhte Kettengeschwindigkeit ergibt. Selbstverständlich kann die Ansteuerung auch so erfolgen, dass lediglich eine der beiden Fahrpumpen 6 entsprechend betätigt wird, so dass lediglich die Kettengeschwindigkeit auf einer Fahrzeugseite erhöht oder reduziert wird.

Um dem Fahrer des Kettenfahrzeugs ein Gefühl für die befahrene Strecke zu vermitteln, wie er es aus dem Radfahrzeugbereich kennt, ist im Lenkrad 11 der Lenkkraftsimulator 14 zugeordnet, der zumindest teilweise derartige Reaktions- oder Lenkkräfte bewirkt. Der Lenkkraftsimulator 14 kann als Elektromotor, als hydraulisches Dämpfungselement oder auch als Bremseinheit ausgeführt sein. Die Ansteuerung erfolgt über eine Steuerleitung S₃ von der Steuereinheit S aus abhängig von der jeweiligen Auswertung der erfassten Soll- und Istwerte des entsprechenden Lenkfunktionsmoduls. Insbesondere ist der Lenkkraftsimulator 14 derart ausgelegt, dass in Abhängigkeit von der Lenkgeschwindigkeit, die auf das Lenkrad 11 ausgeübt wird, ein Gegenmoment aufgebaut wird, sobald das Lenkrad schneller bewegt wird als das Fahrzeug mit seiner entsprechenden Fahrdynamik folgen kann. Falls somit der Lenkeinschlag schneller erfolgt als die zulässige Schwenkzeit der entsprechenden hydraulischen Fahrpumpe 6, so wird das entsprechende Gegenmoment aufgebaut. Hierdurch soll insbesondere ein "Verreißen" der Lenkung verhindert werden. Selbstverständlich sind durch den Lenkkraftsimulator 14 auch andere Gegenkraftfunktionen aufbaubar, je nachdem, welche Lenksituationen mit entsprechenden Gegenmomenten versehen werden sollen. Eine entsprechend modifizierte Ansteuerung kann durch Programmierung und Abspeicherung eines entsprechend modifizierten Kennfeldes in der elektronischen Steuereinheit S erfolgen.

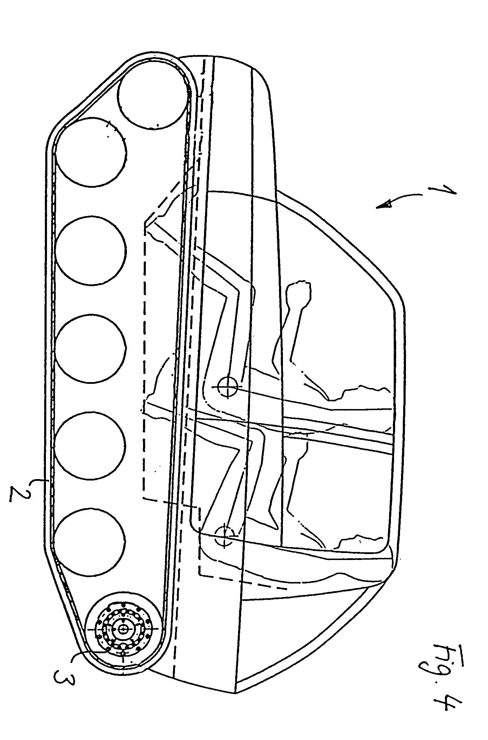

Zudem ist das Kennfeld der Lenkfunktion der Elektronik derart geschwindigkeitsabhängig parametriert, dass bei höheren Fahrzeuggeschwindigkeiten, vorzugsweise größer als 25 km/h, eine indirektere Lenkung erfolgt als bei niedrigen Geschwindigkeiten zwischen 0 km/h und 25 km/h. Anhand der Fig. 3 ist eine derartig parametrierte Lenkkennlinie aufgeführt. Dabei ist ein vom Kettenfahrzeug 1 gefahrener Kurvenradius r auf der Ordinate und ein Lenkwinkel α des Lenkrades 11 auf der Abszisse aufgeführt.

Bei der zusätzlichen geschwindigkeitsabhängigen Parametrierung der Lenkkennlinie kann vorzugsweise zwischen mehreren derartigen Kennlinien interpoliert werden. Vorzugsweise sind drei Kennlinien vorgesehen für drei unterschiedliche Fahrzeuggeschwindigkeiten, insbesondere mit einer Fahrzeuggeschwindigkeit v₁=0, v₂=5 km/h und v₃= der maximalen Höchstgeschwindigkeit. Eine entsprechende Charakteristik derartiger Kennlinien berücksichtigt insbesondere anteilig höhere Leckageverluste innerhalb der jeweiligen Antriebshydraulik bei niedrigen Geschwindigkeiten und entsprechend hohen Abtriebsmomenten. Bei hohen Fahrzeuggeschwindigkeiten hingegen genügen bereits äußerst kleine Volumenstromdifferenzen innerhalb der Hydraulikkreise H₁, um gewünschte Kursänderungen des Kettenfahrzeugs zu erreichen.

Das beschriebene Lenkfunktionsmodul ermöglicht somit eine variable und auf die jeweilige Fahrsituation abgestimmte Zuordnung zwischen dem Lenkwinkel am Lenkrad 11 und dem entsprechenden Schwenkwinkel der Fahrpumpen 6, wodurch sich sowohl bei niedrigen als auch bei hohen Fahrgeschwindigkeiten für den Fahrer ein guter und sicherer Fahr- und Lenkkomfort ergibt.

Auch das Fahrpedal 13 der Fahrfunktionskomponente des Antriebssystems ist ausschließlich elektronisch mit der elektronischen Steuereinheit S und damit mit dem Verbrennungsmotor 4 oder der jeweiligen Antriebshydraulik 6, 7 verbunden. Wie auch das Lenkrad 11 wirkt das Fahrpedal 13 als Sollwertgeber, indem entsprechende Betätigungen des Fahrpedals durch einen Potentiometer 20 aufgenommen und mittels einer Signalleitung T₆ an die elektronische Steuereinheit S übermittelt werden. Auch die Erfassung von Fahrpedalbewegungen ist redundant ausgeführt. Hierzu sind analog der Lenkradausführung auch für das Fahrpedal 13 zwei Potentiometer 20 vorgesehen.

Dem Fahrfunktionsmodul ebenfalls zugeordnet ist ein Fahrtrichtungsschalter 12, der über eine Signalleitung T₅ mit der Steuereinheit S in Verbindung steht und die gewünschte Fahrtrichtung, d.h. vorwärts oder rückwärts, vorgibt. Die Fahrfunktionselektronik weist mehrere Kennfelder auf, die neben der Sollwerterfassung von Fahrpedalstellungen insbesondere Fahrgeschwindigkeitsistwerte über die beiden Drehzahlsensoren 15, Rückmeldungen über die Steuer- und Signalleitung S₁ vom Verbrennungsmotor 4 wie auch nicht näher dargestellte Rückmeldungen über die entsprechenden momentanen Schwenkwinkel der Fahrpumpen 6 aufnimmt. Zudem sind mehrere Fahrzustandssensoren vorgesehen, vorliegend ein Gierwinkelsensor 16 sowie ein Querbeschleunigungssensor 17, die mit Hilfe von Signalleitungen T₈, T₉ mit der Fahrfunktionselektronik innerhalb der Steuereinheit S in Verbindung stehen.

Durch das Fahrpedal 13 wird die Fahrzeug-Sollgeschwindigkeit vorgegeben. Über entsprechende Ansteuerung der Motordrehzahl des Verbrennungsmotors 4 und des Pumpenschwenkwinkels jeder Fahrpumpe 6 wird die gewählte Fahrgeschwindigkeit durch die elektronische Ansteuerung mittels der Steuereinheit S erreicht.

Bei einer bevorzugten Variante wird zum Anfahren des Kettenfahrzeugs 1 aus dem Stillstand der Verbrennungsmotor 4 zunächst über die Leerlaufdrehzahl angehoben und geht dann in einen Drehzahlbereich, der einen besonders guten Wirkungsgrad gewährleistet. Die Fahrpumpen 6 werden entsprechend der gewünschten Fahrgeschwindigkeit ausgeschwenkt. Sobald die Fahrpumpen 6 voll ausgeschwenkt sind, wird die Motordrehzahl des Verbrennungsmotors 4 erhöht, bis die maximale Höchstgeschwindigkeit erreicht ist. Die Fahrfunktionselektronik der Steuereinheit S gibt einer Motorelektronik des Verbrennungsmotors 4 (nicht näher dargestellt) eine Solldrehzahl vor, die durch die Motorelektronik lastunabhängig geregelt wird.

Über die Signalleitung T₆ wird auch eine zeitabhängige Betätigung des Fahrpedals 13 durch die Steuereinheit S aufgenommen. Hierdurch kann ein entsprechender Wunsch des Fahrers für eine starke oder geringe Beschleunigung erfasst werden und über die Fahrfunktionselektronik umgesetzt werden. Lediglich kleine Pedalbewegungen werden durch die Steuereinheit S elektronisch gedämpft, da geringe Fußbewegungen des Fahrers auch ungewollt durch Fahrzeugerschütterungen entstehen können. Wie auch die Lenkkennlinie wird die Fahrpedalkennlinie parametriert, um dem Fahrer eine verbesserte Fahrdynamik zu übermitteln. So ist es für ein entsprechendes Kennfeld der Fahrfunktionselektronik insbesondere abgespeichert, bei geringen Fahrzeuggeschwindigkeiten einen relativ großen Pedalweg und bei hohen Geschwindigkeiten einen geringen Pedalweg für die jeweils gleiche Geschwindigkeitsänderung zuzulassen. Alternativ ist es auch möglich, umschaltbare Geschwindigkeitsbereiche vorzusehen, vorzugsweise einen ersten Geschwindigkeitsbereich zwischen 0 km/h und 25 km/h und einen zweiten Geschwindigkeitsbereich zwischen 0 km/h und 50 km/h. Beiden Geschwindigkeitsbereichen wird jeweils der volle Pedalweg zugeordnet. Dadurch ergibt sich bei langsamen Fahrgeschwindigkeiten eine verbesserte Auflösung des Pedalweges. Eine entsprechend parametrierte Fahrpedalkennlinie ist in Fig. 2 dargestellt. Dabei ist auf der Ordinate der Pedalweg w und auf der Abszisse die Fahrgeschwindigkeit v dargestellt.

Die Fahrfunktionselektronik enthält zudem eine Gleichlaufregelung, insbesondere für exakten Geradeauslauf auch bei hohen Geschwindigkeiten. Aufgrund der Erfassung der Drehzahlen der Turasräder 3 kann überwacht werden, ob die entsprechenden Kettenlaufgeschwindigkeiten auf beiden Fahrzeugseiten auch exakt dem entsprechenden Sollwert des jeweiligen Lenkeinschlages des Lenkrades 11 entsprechen, d.h. bei Geradeauslauf müssen beide Kettengeschwindigkeiten exakt gleich sein. Vorzugsweise ist eine Rückstellzentrierung für das Lenkrad 11 vorgesehen, die, insbesondere durch Federkraft das Lenkrad 11 in der Nulllage zentriert hält.

Sobald die redundant ausgeführte Lenkfunktionskomponente oder die redundant ausgeführte Fahrfunktionskomponente ausfällt, überführt die elektronische Steuereinheit S das Fahrzeug in einen Notfahrbetrieb, der auch als "limp home" bezeichnet wird. Hierdurch kann mit verminderter Fahrgeschwindigkeit sicher bis zur nächsten Werkstatt gefahren werden.

Wie zuvor bereits angeführt wurde, erhält die Fahrfunktionselektronik Informationen über Fahrgeschwindigkeit, Lenkwinkel, Lenkgeschwindigkeit, Fahrpedal- oder Bremspedalstellung, Motordrehzahl, Pumpenschwenkwinkel der Fahrpumpen 6 sowie über Fahrzeuggierwinkel oder Fahrzeugquerbeschleunigung. Mit diesen Informationen wird ein in einem entsprechenden Kennfeld der Fahrfunktionselektronik abgespeicherte Fahrstabilitätsprogramm gespeist. Dabei wird berechnet, ob die jeweils erfassten Werte noch innerhalb zulässiger, fahrdynamisch stabiler Grenzen liegen. Sobald dies nicht mehr der Fall ist, wird elektronisch gegengesteuert. Dabei erfolgt im Gegensatz zu Radfahrzeugen der Eingriff nicht über einen Bremseingriff an Rädern, sondern über entsprechend schnelles Verschwenken von linker und/oder rechter Fahrpumpe 6.

In der Fahrfunktionselektronik sind auch Sperrfunktionen vorgesehen. So kann optional eine Verriegelung von hochdynamischen Fahrmanövern, wie insbesondere einem Kettengegenlauf bei vollem Lenkwinkel, vorgenommen werden. Eine derartige Verriegelung erfolgt vorzugsweise über Schlüsselschalter. Alternativ ist es auch möglich, über einen derartigen Schlüsselschalter das Fahrstabilitätsprogramm auszuschalten, um insbesondere auch hochdynamische Fahrmanöver zuzulassen.

## Patentansprüche

1. Kettenfahrzeug mit einem Antriebssystem sowie mit einem Lenkfunktionsbedienelement und mit einem Fahrfunktionsbedienelement, die mit dem Antriebssystem in Wirkverbindung stehen, **dadurch gekennzeichnet, dass** das Lenkfunktionsbedienelement (11) und/oder das Fahrfunktionsbedienelement (13) als Sollwertgeber zur elektronischen Ansteuerung eines entsprechenden Lenkfunktionsmoduls und/oder eines entsprechenden Fahrfunktionsmoduls des Antriebssystems ausgeführt sind.

2. Kettenfahrzeug nach Anspruch 1, **dadurch gekennzeichnet, dass** dem Lenkfunktionsbedienelement (11) und/oder dem Fahrfunktionsbedienelement (13) jeweils ein Sensormittel zur Erfassung von Bedienbewegungen zugeordnet ist, das jeweils durch wenigstens eine elektronische Datenübertragungsleitung (T₄, T₆) mit einer elektronischen Steuereinheit (S) in Verbindung steht, dass das Lenkfunktionsmodul (11) und das Fahrfunktionsmodul (13) mit Sensoren (15) zur Erfassung von Istwerten für Lenk- und Fahrvorgänge versehen sind, und dass die elektronische Steuereinheit (S) mit einer Auswerteeinheit versehen ist, die abhängig von einem vorgegebenen Soll/Istwert-Kennfeld das Lenkfunktionsmodul und das Fahrfunktionsmodul entsprechend ansteuert.

3. Kettenfahrzeug nach Anspruch 1, **dadurch gekennzeichnet, dass** eine das Lenkfunktionsbedienelement (11) und das Lenkfunktionsmodul umfassende Lenkfunktionskomponente und/oder eine das Fahrfunktionsbedienelement (13) und das Fahrfunktionsmodul umfassende Fahrfunktionskomponente redundant ausgeführt sind.

4. Kettenfahrzeug nach Anspruch 2, **dadurch gekennzeichnet, dass** die Sensormittel physikalische Bewegungsgrößen der Bedienbewegung erfassen.

5. Kettenfahrzeug nach Anspruch 2, **dadurch gekennzeichnet, dass** das Soll/lstwert-Kennfeld für das Fahrfunktionsmodul und/oder das Lenkfunktionsmodul derart ausgeführt ist, dass erfasste physikalische Bewegungsgrößen der Sollwertgeber, insbesondere Weg-, Winkel- und/oder Zeitintervalle, nicht linear, parametriert auf das Lenkfunktionsmodul und/oder das Fahrfunktionsmodul übertragen werden, insbesondere abhängig von einer Fahrgeschwindigkeit des Kettenfahrzeugs.

6. Kettenfahrzeug nach Anspruch 1, **dadurch gekennzeichnet, dass** dem Lenkfunktionsbedienelement ein Lenkkraftsimulator (14) zugeordnet ist, der auf fahrdynamische Eigenschaften der Lenkfunktionskomponente abgestimmt ist.

7. Kettenfahrzeug nach Anspruch 6, **dadurch gekennzeichnet, dass** eine Parametrierung der Übertragung von Lenkbewegungen des Lenkfunktionsbedienelementes (11) abhängig von einem Kurvenradius des Kettenfahrzeugs (1) oder abhängig von einer Reaktionszeit des Lenkfunktionsmoduls erfolgt.

8. Kettenfahrzeug nach Anspruch 3, **dadurch gekennzeichnet, dass** der Lenkfunktionskomponente und/oder der Fahrfunktionskomponente Funktionsüberwachungsmittel zugeordnet sind, die mit der elektronischen Steuereinheit (S) in Verbindung stehen, und dass in der Auswerteeinheit ein Fehlerkennfeld abgespeichert ist, das bei Ausfall einer redundant ausgeführten Komponente eine Notfahrfunktion für das Antriebssystem auslöst.

9. Kettenfahrzeug nach Anspruch 1, **dadurch gekennzeichnet, dass** an die elektronische Steuereinheit (S) angeschlossene Fahrzustandssensoren (16, 17) vorgesehen sind, die momentane Fahrzustände des Kettenfahrzeugs (1) erfassen, und dass in der Auswerteeinheit ein Fahrstabilitätsprogramm abgelegt ist, das abhängig von den erfassten momentanen Fahrzuständen eine Ansteuerung von Funktionskomponenten des Antriebssystems durchführt.

10. Kettenfahrzeug nach Anspruch 2, **dadurch gekennzeichnet, dass** die elektronische Steuereinheit (S) übermittelte Daten der Sensoren (15) derart auswertet, dass ein Synchronlauf von Kettentrieben beider Fahrzeugseiten abhängig von jedem momentanen Bewegungsposition des Lenkfunktionsbedienelementes (11) erfolgt.

11. Kettenfahrzeug nach Anspruch 1, **dadurch gekennzeichnet, dass** Dämpfungsmittel für das Fahrfunktionsbedienelement (13) vorgesehen sind.

12. Kettenfahrzeug nach Anspruch 2, **dadurch gekennzeichnet, dass** in der elektronischen Steuereinheit (S) Sperrfunktionen abgespeichert sind, die vorgegebene Betriebsfunktionen in definierten Fahrsituationen wahlweise oder zwangsläufig blockieren.
